(19)

**Europäisches Patentamt**
**European Patent Office**
**Office européen des brevets**

(11)    **EP 4 660 339 A1**

(12)    **EUROPEAN PATENT APPLICATION**

(43) Date of publication:
**10.12.2025   Bulletin 2025/50**

(21) Application number: **25181436.4**

(22) Date of filing: **06.06.2025**

(51) International Patent Classification (IPC):
*C22C 19/03* (2006.01)          *C22C 19/05* (2006.01)
*F01D 5/00* (2006.01)           *C22F 1/10* (2006.01)

(52) Cooperative Patent Classification (CPC):
**C22C 19/03; C22C 19/056; C22C 19/057;
C22F 1/10; F01D 5/005**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **07.06.2024   US 202463657177 P
16.05.2025   US 202519210908**

(71) Applicant: **GE Vernova Technology GmbH
5400 Baden (CH)**

(72) Inventors:
• **NALAWADE, Sachin Ananda
560066 Bangalore (IN)**
• **ORUGANTI, Ramkumar Kashyap
560066 Bangalore (IN)**
• **T, Vishwanath
47200 Subang (MY)**
• **PECK, Arthur S.
Greenville, 29615 (US)**
• **ARNETT, Michael D.
Greenville, 29615 (US)**
• **KOTTILINGAM, Srikanth C.
Greenville, 29615 (US)**
• **PASUPULETI, Mahesh
560066 Bangalore (IN)**

(74) Representative: **Openshaw & Co.
8 Castle Street
Farnham, Surrey GU9 7HR (GB)**

(54)    **METHODS FOR REPAIRING DIRECTIONALLY SOLIDIFIED SUPERALLOYS**

(57)    Described herein are methods for repairing directionally solidified (DS) superalloy compositions, as well as DS superalloy compositions repaired according to the methods. The methods and repaired DS superalloy compositions are broadly applicable in applications requiring superalloys with extended lives.

**EP 4 660 339 A1**

110

112 — optionally subjecting the DS superalloy composition to a hot isostatic pressing (HIP) cycle;

114 — heating the DS superalloy composition to a rejuvenation temperature ($T_R$) according to a multi-step heating profile;

116 — exposing the DS superalloy composition to the rejuvenation temperature ($T_R$) for a time sufficient to rejuvenate the DS superalloy composition;

118 — cooling the DS superalloy composition at a first cooling rate ($r_{C1}$) to a first cooling temperature ($T_{C1}$);

120 — cooling the DS superalloy composition at a second cooling rate ($r_{C2}$) to a second cooling temperature ($T_{C2}$);

122 — exposing the DS superalloy composition to a first aging temperature ($T_{A1}$) for a first time sufficient to age the DS superalloy composition; and

124 — exposing the DS superalloy composition to a second aging temperature ($T_{A2}$) for a second time sufficient to age the DS superalloy composition

FIG. 1

**Description**

CROSS-REFERENCE TO RELATED APPLICATIONS

This application claims priority to U.S. Provisional Patent No. 63/657,177, filed June 7, 2024, which is hereby incorporated by reference herein.

BACKGROUND

The field of the disclosure relates generally to methods for repairing directionally solidified (DS) superalloy compositions, as well as DS superalloy compositions repaired according to the methods. The methods and repaired DS superalloy compositions are broadly applicable in applications requiring superalloys with extended lives.

Superalloys are useful in a wide variety of applications, such as for use in fabricating turbine blades. Directionally solidified (DS) superalloys are particularly useful in gas turbine blades because such materials may have improved heat treat characteristics, good high temperature longitudinal and transverse creep strength properties, and good hot corrosion resistance and resistance to oxidation.

Life extension of service-retired superalloy gas turbine blades through rejuvenation heat treatment (HT) is a well-known practice. However, rejuvenation repair technology is not used with DS superalloys because of the risk of poor ductility and damage tolerance in the direction perpendicular to the grain boundaries (transverse orientation) following rejuvenation.

Later stage turbine blades fabricated with DS superalloys, like DS GTD444 described in U.S. Patent No. 6,908,518, are currently retired after completion of their designed service life of 1-2 intervals. As can be appreciated, the relatively early retirement has significant financial impact.

Accordingly, there is a need for methods for creep rejuvenation repair of DS superalloys.

BRIEF DESCRIPTION

In one aspect, a method of repair of a directionally solidified (DS) superalloy composition is provided. The method includes optionally subjecting the DS superalloy composition to a hot isostatic pressing (HIP) cycle; heating the DS superalloy composition to a rejuvenation temperature ($T_R$) according to a multi-step heating profile; exposing the DS superalloy composition to the rejuvenation temperature ($T_R$) for a time sufficient to rejuvenate the DS superalloy composition; cooling the DS superalloy composition at a first cooling rate ($r_{C1}$) to a first cooling temperature ($T_{C1}$); cooling the DS superalloy composition at a second cooling rate ($r_{C2}$) to a second cooling temperature ($T_{C2}$); exposing the DS superalloy composition to a first aging temperature ($T_{A1}$) for a first time sufficient to age the DS superalloy composition; and exposing the DS superalloy composition to a second aging temperature ($T_{A2}$) for a second time sufficient to age the DS superalloy composition.

In another aspect, a repaired directionally solidified (DS) superalloy composition is provided. The repaired DS superalloy composition is repaired according to a method comprising: optionally subjecting a DS superalloy composition to a hot isostatic pressing (HIP) cycle; heating the DS superalloy composition to a rejuvenation temperature ($T_R$) according to a multi-step heating profile; exposing the DS superalloy composition to the rejuvenation temperature ($T_R$) for a time sufficient to rejuvenate the DS superalloy composition; cooling the DS superalloy composition at a first cooling rate ($r_{C1}$) to a first cooling temperature ($T_{C1}$); cooling the DS superalloy composition at a second cooling rate ($r_{C2}$) to a second cooling temperature ($T_{C2}$); exposing the DS superalloy composition to a first aging temperature ($T_{A1}$) for a first time sufficient to age the DS superalloy composition; and exposing the DS superalloy composition to a second aging temperature ($T_{A2}$) for a second time sufficient to age the DS superalloy composition; wherein the repaired DS superalloy composition possesses at least one of at least 80% creep recovery, at least 2% transverse ductility recovery, and at least 10% longitudinal ductility recovery relative to the DS superalloy composition.

BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:

FIG. 1 is a flow chart illustrating an exemplary method of repairing directionally solidified superalloys in accordance with the present disclosure;

FIG. 2A is an exemplary SEM image of rejuvenation at 1218 °C;

FIG. 2B is an exemplary SEM image of rejuvenation at 1238 °C;

FIG. 3A is an exemplary SEM image of dislocations due to creep for a rejuvenation at 1232 °C;

FIG. 3B is an exemplary TEM image of the area within the square of FIG. 3A; and

FIG. 4 depicts exemplary SEM images of fractography initiated on the plane of script carbides after direct gas quench cooling from the rejuvenation temperature (e.g., 1238 °C).

DETAILED DESCRIPTION

It was discovered herein that a method according to the present disclosure could mitigate the risk of poor damage tolerance and enable successful rejuvenation of DS superalloy compositions, such as those in fabricating gas turbine blades, particularly those in gas turbine blades that have accumulated $\leq$ 2% strain in the longitudinal orientation and $\leq$ 0.75% strain in the transverse orientation. The method, according to the present disclosure, includes a heat treatment (HT) routing, which may also mitigate other known metallurgical risks, including but not limited to incipient melting (IM), nucleation of recrystallized (RX) grains, thermal quench cracks, and intra-grain gamma prime (GP) microstructures that may adversely affect ductility. The HT routing was successfully validated through multiple repeat tests at 760 °C/85ksi on five different material pedigrees of DS GTD444 demonstrating at least 80% creep recovery with respect to baseline, at least 2% transverse ductility, and at least 10% longitudinal ductility.

There are several key aspects of the present disclosure. First, there is controlled step ramp heating that avoids incipient melting (IM) of grain boundary (GB) borides and eutectic gamma prime (GP) at inter-dendritic (ID) regions. Second, there is rejuvenation at a rejuvenation temperature suitable to avoid recrystallized (RX) grain formation at highly strained locations. Full creep recovery occurs in dendritic-core (DC) regions and partial creep recovery occurs in inter-dendritic (ID) regions. Full creep recovery in inter-dendritic (ID) regions would need higher temperatures (e.g. > 1246 °C) and thus risk recrystallized (RX) grain nucleation and incipient melting (IM). Third, there is two slope cooling (e.g., a slow cool to 1204 °C and a gas fan cool to 899 °C at a rate of 69 °C per minute) that minimizes quench strain damage that impacts transverse ductility. This results in gamma prime (GP) microstructures that balance creep rate and transverse ductility. Fourth, there is a safe creep strain limit of 2% longitudinal creep strain and 0.75% transverse creep strain. This enables successful rejuvenation to meet at least 2% transverse rupture ductility and at least 80% baseline creep life recovery post rejuvenation.

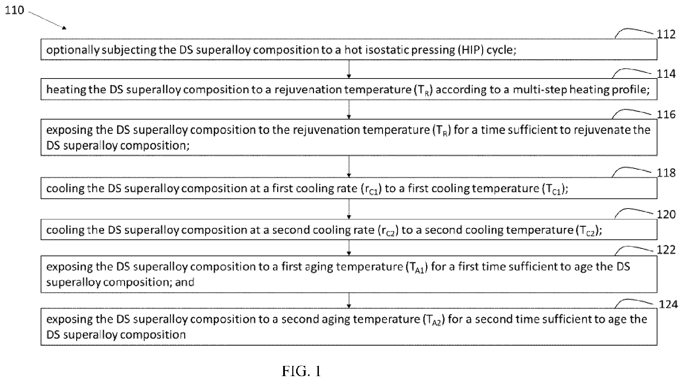

Figure 1 is an exemplary flow chart 110 of an exemplary method of repairing directionally solidified superalloys. In the exemplary embodiment, flow chart 110 depicts exemplary method steps and is not intended to limit the embodiments. In the exemplary embodiment, the method includes optionally subjecting 112 the DS superalloy composition to a hot isostatic pressing (HIP) cycle; heating 114 the DS superalloy composition to a rejuvenation temperature ($T_R$) according to a multi-step heating profile; exposing 116 the DS superalloy composition to the rejuvenation temperature ($T_R$) for a time sufficient to rejuvenate the DS superalloy composition; cooling 118 the DS superalloy composition at a first cooling rate ($r_{C1}$) to a first cooling temperature ($T_{C1}$); cooling 120 the DS superalloy composition at a second cooling rate ($r_{C2}$) to a second cooling temperature ($T_{C2}$); exposing 122 the DS superalloy composition to a first aging temperature ($T_{A1}$) for a first time sufficient to age the DS superalloy composition; and exposing 124 the DS superalloy composition to a second aging temperature ($T_{A2}$) for a second time sufficient to age the DS superalloy composition.

Generally, the temperatures used in the exemplary embodiment described herein may be any suitable temperatures known in the art that facilitate the method described herein. In some embodiments, at least one of $T_{A2} \leq T_{C2}$; $T_{C2} < T_{A1}$; $T_{A1} < T_{C1}$; and $T_{C1} < T_R$. In some embodiments, $T_{A2} \leq T_{C2}$; $T_{C2} < T_{A1}$; $T_{A1} < T_{C1}$; and $T_{C1} < T_R$. In some embodiments, at least one of 885 °C $\leq T_{A2} \leq$ 913 °C; 885 °C $\leq T_{C2} \leq$ 913 °C; 1107 °C $\leq T_{A1} \leq$ 1135 °C; 1190 °C $\leq T_{C1} \leq$ 1219 °C; and 1224 °C $\leq T_R \leq$ 1252 °C. In some embodiments, 885 °C $\leq T_{A2} \leq$ 913 °C; 885 °C $< T_{C2} \leq$ 913 °C; 1107 °C $\leq T_{A1} \leq$ 1135 °C; 1190 °C $\leq T_{C1} \leq$ 1219 °C; and 1224 °C $\leq T_R \leq$ 1252 °C.

In some embodiments, rejuvenation temperature ($T_R$) is greater than GP solvus in DC regions but less than solvus in ID regions.

Generally, the temperature rates of the method described herein may be any suitable temperature rates known in the art that facilitate the method described herein. In some embodiments, $r_{C1} < r_{C2}$. In some embodiments, at least one of $r_{C1} \leq 17$ °C/min and $r_{C2} \leq 83$ °C/min. In some embodiments, $r_{C1} < r_{C2}$. In some embodiments, $r_{C1} \leq 17$ °C/min and $r_{C2} \leq 83$ °C/min.

In some embodiments, the multi-step heating profile includes: heating the DS superalloy composition at a first heating rate ($r_{H1}$) to a first heating temperature ($T_{H1}$); heating the DS superalloy composition at a second heating rate ($r_{H2}$) to a second heating temperature ($T_{H2}$); heating the DS superalloy composition at a third heating rate ($r_{H3}$) to a third heating temperature ($T_{H3}$); exposing the DS superalloy composition to the third heating temperature ($T_{H3}$) for a first heating time; and heating the DS superalloy composition at a fourth heating rate ($r_{H4}$) to the rejuvenation temperature ($T_R$).

In some embodiments, at least one of $T_{H1} < T_{H2}$; $T_{H2} < T_{H3}$; and $T_{H3} < T_R$. In some embodiments, $T_{H1} < T_{H2}$; $T_{H2} < T_{H3}$; and $T_{H3} < T_R$. In some embodiments, at least one of 801 °C $\leq T_{H1} \leq$ 830 °C; 1107 °C $\leq T_{H2} \leq$ 1135 °C; 1204 °C $\leq T_{H3} \leq$ 1233 °C; and 1224 °C $\leq T_R \leq$ 1252 °C. In some embodiments, 801 °C $\leq T_{H1} \leq$ 830 °C; 1107 °C $\leq T_{H2} \leq$ 1135 °C; 1204 °C $\leq T_{H3} \leq$ 1233 °C; and 1224 °C $\leq T_R \leq$ 1252 °C.

In some embodiments, at least one of $r_{H4} \leq r_{H3}$; $r_{H3} < r_{H2}$; and $r_{H2} < r_{H1}$. In some embodiments, $r_{H4} \leq r_{H3}$; $r_{H3} < r_{H2}$; and $r_{H2} < r_{H1}$. In some embodiments, at least one of $r_{H1} \leq$ 17 °C/min; $r_{H2} \leq$ 5.5 °C/min; $r_{H3} \leq$ 0.83 °C/min; and $r_{H4} \leq$ 0.23 °C/min. In some embodiments, $r_{H1} \leq$ 17 °C/min; $r_{H2} \leq$ 83 °C/min; $r_{H3} \leq$ 0.83 °C/min; and $r_{H4} \leq$ 0.83 °C/min.

Generally, the time periods used with the method described herein may be any suitable time periods known in the art that facilitate the method described herein. In some embodiments, the time sufficient to rejuvenate the DS superalloy composition is in a range of from about 0.5 hours to about 6 hours. In some embodiments, the first time sufficient to age the DS superalloy composition is in a range of from about 0.5 hours to about 4 hours. In some embodiments, the second time sufficient to age the DS superalloy composition is in a range of from about 0.5 hours to about 6 hours.

Generally, the HIP cycle of the method described herein may be any suitable HIP cycle known in the art that facilitates the method described herein. In some embodiments, the HIP cycle closes an internal porosity of the DS superalloy composition. In some embodiments, the HIP cycle is the HIP cycle described in U.S. Patent No. 6,908,518, which is hereby incorporated by reference in its entirety. In some embodiments, the HIP cycle includes heating the DS superalloy composition to a temperature in a range of about 1190 °C to about 1232 °C at an elevated pressure. In some embodiments, the HIP cycle includes heating the DS superalloy composition to a temperature in a range of about 1204 °C to about 1226 °C at a pressure in a range of about 100 MPa °C to about 107 MPa for a time in a range of from about 3.75 hours to about 4.5 hours.

Generally, the DS superalloy composition may be any suitable DS superalloy composition known in the art that facilitates the method described herein. In some embodiments, the DS superalloy composition is a nickel-based DS superalloy composition.

In some embodiments, the DS superalloy composition is a DS GTD444 composition. In some embodiments, the DS superalloy composition is the composition described in U.S. Patent No. 6,908,518, which is hereby incorporated by reference in its entirety. In some embodiments, the DS superalloy composition is a composition including 7.0 wt% to 12.0 wt% chromium, 0.06 wt% to 0.10 wt% carbon, 5.0 wt% to 15.0 wt% cobalt, 3.0 wt% to 5.0 wt% titanium, 3.0 wt% to 5.0 wt% aluminum, 3.0 wt% to 12.0 wt% tungsten, 1.0 wt% to 5.0 wt% molybdenum, 0.0080 wt% to 0.01 wt% boron, 0 wt% to 10.0 wt% rhenium, 2.0 wt% to 6.0 wt% tantalum, 0 wt% to 2.0 wt% columbium, 0 wt% to 3.0 wt% vanadium, 0 wt% to 2.0 wt% hafnium, and remainder nickel and incidental impurities.

In some embodiments, the DS superalloy composition is a DS R108 superalloy composition. In some embodiments, the DS superalloy composition is a superalloy composition described in U.S. Patent No. 5,554,837, which is hereby incorporated by reference in its entirety. In some embodiments, the DS superalloy composition is a composition including 8.0 wt% to 8.7 wt% chromium, 0.07 wt% to 0.10 wt% carbon, 9.0 wt% to 10.0 wt% cobalt, 0.6 wt% to 0.9 wt% titanium, 5.25 wt% to 5.75 wt% aluminum, 9.3 wt% to 9.7 wt% tungsten, 0.4 wt% to 0.6 wt% molybdenum, 0.01 wt% to 0.02 wt% boron, 0 wt% rhenium, 2.8 wt% to 3.3 wt% tantalum, 0.005 wt% to 0.02 wt% zirconium, 1.3 wt% to 1.7 wt% hafnium, and remainder nickel and incidental impurities.

In some embodiments, prior to the method, the DS superalloy composition accumulated $\leq$ 2% longitudinal strain and $\leq$ 0.75% transverse strain. In some embodiments, the method provides to the DS superalloy composition at least one of at least 80% creep recovery, at least 2% transverse ductility recovery, and at least 10% longitudinal ductility recovery.

In some embodiments, prior to the method, the DS superalloy composition accumulated $\leq$ 0.25% longitudinal strain, $\leq$ 0.5% longitudinal strain, $\leq$ 0.75% longitudinal strain, $\leq$ 1.0% longitudinal strain, $\leq$ 1.25% longitudinal strain, or $\leq$ 1.5% longitudinal strain, $\leq$ 1.75% longitudinal strain, or $\leq$ 2.0% longitudinal strain.

In some embodiments, prior to the method, the DS superalloy composition accumulated $\leq$ 0.25% transverse strain, $\leq$ 0.5% transverse strain, or $\leq$ 0.75% transverse strain.

In some embodiments, the method provides to the DS superalloy composition at least 80% creep recovery, at least 85% creep recovery, at least 90% creep recovery, at least 95% creep recovery, or 100% creep recovery.

In some embodiments, the method provides to the DS superalloy composition at least 2% transverse ductility recovery, at least 3% transverse ductility recovery, at least 4% transverse ductility recovery, at least 5% transverse ductility recovery, at least 6% transverse ductility recovery, at least 7% transverse ductility recovery, at least 8% transverse ductility recovery, at least 9% transverse ductility recovery, or at least 10% transverse ductility recovery.

In some embodiments, the method provides to the DS superalloy composition at least 10% longitudinal ductility recovery, at least 15% longitudinal ductility recovery, at least 20% longitudinal ductility recovery, at least 25% longitudinal ductility recovery, or at least 30% longitudinal ductility recovery.

Also described herein is an article including the composition. Generally, the composition may be included in any suitable article known in the art that facilitates the use of the composition described herein. In some embodiments, the article is a component of a turbine. In some embodiments, the turbine is a gas turbine or a steam turbine. In some embodiments, the article is a component of a gas turbine selected from the group consisting of a blade, a squealer tip, a nozzle, a shroud, a splash plate, a combustor component, and/or any combination thereof.

Also described herein is a repaired directionally solidified (DS) superalloy composition. The repaired DS superalloy composition is repaired according to an exemplary method that includes: optionally subjecting a DS superalloy composition to a high temperature isostatic pressing (HIP) cycle; heating the DS superalloy composition to a rejuvenation temperature ($T_R$) according to a multi-step heating profile; exposing the DS superalloy composition to the rejuvenation temperature ($T_R$) for a time sufficient to rejuvenate the DS superalloy composition; cooling the DS superalloy composition at a first cooling rate ($r_{C1}$) to a first cooling temperature ($T_{C1}$); cooling the DS superalloy composition at a second cooling rate ($r_{C2}$) to a second cooling temperature ($T_{C2}$); exposing the DS superalloy composition to a first aging temperature ($T_{A1}$) for a first time sufficient to age the DS superalloy composition; and exposing the DS superalloy composition to a second aging temperature ($T_{A2}$) for a second time sufficient to age the DS superalloy composition. The repaired DS superalloy composition possesses at least one of at least 80% creep recovery, at least 2% transverse ductility recovery, and at least 10% longitudinal ductility recovery relative to the DS superalloy composition.

Further aspects of the present disclosure are provided by the subject matter of the following clauses:

1. A method of repair of a directionally solidified (DS) superalloy composition, the method comprising:

optionally subjecting the DS superalloy composition to a hot isostatic pressing (HIP) cycle;
heating the DS superalloy composition to a rejuvenation temperature ($T_R$) according to a multi-step heating profile;
exposing the DS superalloy composition to the rejuvenation temperature ($T_R$) for a time sufficient to rejuvenate the DS superalloy composition;
cooling the DS superalloy composition at a first cooling rate ($r_{C1}$) to a first cooling temperature ($T_{C1}$);
cooling the DS superalloy composition at a second cooling rate ($r_{C2}$) to a second cooling temperature ($T_{C2}$);
exposing the DS superalloy composition to a first aging temperature ($T_{A1}$) for a first time sufficient to age the DS superalloy composition; and
exposing the DS superalloy composition to a second aging temperature ($T_{A2}$) for a second time sufficient to age the DS superalloy composition.

2. The method according to the preceding clause, wherein at least one of:

$$T_{A2} \leq T_{C2};$$

$$T_{C2} < T_{A1};$$

$$T_{A1} < T_{C1};$$

and

$$T_{C1} < T_R.$$

3. The method according to any preceding clause, wherein at least one of:

$$885\ °C \leq T_{A2} \leq 913\ °C;$$

$$885\ °C \leq T_{C2} \leq 913\ °C;$$

$$1107\ °C \leq T_{A1} \leq 1135\ °C;$$

$$1190\ °C \leq T_{C1} \leq 1219\ °C;$$

and

$$1224\ °C \leq T_R \leq 1252\ °C.$$

4. The method according to any preceding clause, wherein $r_{C1} < r_{C2}$.

5. The method according to any preceding clause, wherein at least one of:

$$r_{C1} \leq 17 \text{ °C/min};$$

and

$$r_{C2} \leq 83 \text{ °C/min}.$$

6. The method according to any preceding clause, wherein the multi-step heating profile comprises:

heating the DS superalloy composition at a first heating rate ($r_{H1}$) to a first heating temperature ($T_{H1}$);
heating the DS superalloy composition at a second heating rate ($r_{H2}$) to a second heating temperature ($T_{H2}$);
heating the DS superalloy composition at a third heating rate ($r_{H3}$) to a third heating temperature ($T_{H3}$);
exposing the DS superalloy composition to the third heating temperature ($T_{H3}$) for a first heating time; and
heating the DS superalloy composition at a fourth heating rate ($r_{H4}$) to the rejuvenation temperature ($T_R$).

7. The method according to any preceding clause, wherein at least one of:

$$T_{H1} < T_{H2};$$

$$T_{H2} < T_{H3};$$

and

$$T_{H3} < T_R.$$

8. The method according to any preceding clause, wherein at least one of:

$$r_{H4} \leq r_{H3};$$

$$r_{H3} < r_{H2};$$

and

$$r_{H2} < r_{H1}.$$

9. The method according to any preceding clause, wherein at least one of:

$$r_{H1} \leq 17 \text{ °C/min};$$

$$r_{H2} \leq 5.5 \text{°C/min};$$

$$r_{H3} \leq 0.83 \text{ °C/min};$$

and

$$r_{H4} \leq 0.23 \text{ °C/min}.$$

10. The method according to any preceding clause, wherein the time sufficient to rejuvenate the DS superalloy composition is in a range of from about 0.5 hours to about 6 hours.

11. The method according to any preceding clause, wherein the first time sufficient to age the DS superalloy composition is in a range of from about 0.5 hours to about 4 hours.

12. The method according to any preceding clause, wherein the second time sufficient to age the DS superalloy composition is in a range of from about 0.5 hours to about 6 hours.

13. The method according to any preceding clause, wherein the DS superalloy composition is a nickel-based DS superalloy composition.

14. The method according to any preceding clause, wherein, prior to the method, the DS superalloy composition accumulated ≤ 2% longitudinal strain and ≤ 0.75% transverse strain.

15. The method according to any preceding clause, wherein the DS superalloy composition is a DS GTD444 composition or a DS R108 composition.

16. The method according to any preceding clause, wherein the DS superalloy composition is present in an article.

17. The method according to any preceding clause, wherein the article is a component of a gas turbine selected from the group consisting of a blade, a squealer tip, a nozzle, a shroud, a splash plate, a combustor component, and a combination thereof.

18. The method according to any preceding clause, wherein the method provides to the DS superalloy composition at least one of at least 80% creep recovery, at least 2% transverse ductility recovery, and at least 10% longitudinal ductility recovery.

19. A repaired directionally solidified (DS) superalloy composition, wherein the repaired DS superalloy composition is repaired according to a method comprising:

optionally subjecting a DS superalloy composition to a hot isostatic pressing (HIP) cycle;

heating the DS superalloy composition to a rejuvenation temperature ($T_R$) according to a multi-step heating profile;

exposing the DS superalloy composition to the rejuvenation temperature ($T_R$) for a time sufficient to rejuvenate the DS superalloy composition;

cooling the DS superalloy composition at a first cooling rate ($r_{C1}$) to a first cooling temperature ($T_{C1}$);

cooling the DS superalloy composition at a second cooling rate ($r_{C2}$) to a second cooling temperature ($T_{C2}$);

exposing the DS superalloy composition to a first aging temperature ($T_{A1}$) for a first time sufficient to age the DS superalloy composition; and

exposing the DS superalloy composition to a second aging temperature ($T_{A2}$) for a second time sufficient to age the DS superalloy composition;

wherein the repaired DS superalloy composition possesses at least one of at least 80% creep recovery, at least 2% transverse ductility recovery, and at least 10% longitudinal ductility recovery relative to the DS superalloy composition.

20. The repaired directionally solidified (DS) superalloy composition according to the preceding clause, wherein, prior to the method, the DS superalloy composition accumulated ≤ 2% longitudinal strain and ≤ 0.75% transverse strain.

References to "some embodiments" in the above description are not intended to be interpreted as excluding the existence of additional embodiments that also incorporate the recited features.

EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever. The starting material for the following Examples may not have necessarily been prepared by a particular preparative run whose procedure is described in other Examples. It also is understood that any numerical range recited herein includes all values from the lower value to the upper value. For example, if a range is stated as 10-50, it is intended that values such as 12-30, 20-40, or 30-50, etc., are expressly enumerated in this specification. These are only examples of what is specifically intended, and all possible combinations of numerical values between and including the lowest value and the highest value enumerated are to be considered to be expressly stated in this application.

Example 1. Rejuvenation Heat Treatment Routing for DS GTD444.

A method according to the present disclosure is shown in the below table. The HIP aspect is optional but may provide additional benefits in the event of voids or micro-cracks resulting from service. The heating ramp aspect is in the form of a combined multi-step heating profile. Controlling heating rates or hold times at temperatures above about 1093.3 °C are critical to avoid potential risks of IM melting of grain boundaries, eutectic gamma prime, or boride precipitates. The rejuvenation aspect includes an optimal temperature to recover creep strain (complete recovery in DC region but partial recovery in ID region) without risk of RX grain nucleation. This optimal temperature differs depending on the particular DS superalloy composition. The cooling aspect minimizes quench strain related damage that impacts transverse ductility. It obtains GP microstructures that balance creep rate and transverse ductility. There were no specific constraints on the heating ramp rates or cooling ramp rates for either of the aging aspects.

Validation of this method was performed through multiple repeat tests (minimum five) at 760 °C/85ksi on five different material pedigrees of DS GTD444. An average recovery of about 2.95% transverse ductility was observed.

Table 1. Rejuvenation Heat Treatment Routing for DS GTD444.

| Aspect Category | Detailed description |
|---|---|
| Optional HIP | Standard HIP conditions |
| Heating Ramp | Ramp to 815.56 °C at rate of 17 °C/min or slower<br>Argon partial pressure ~400 micron above 816 °C<br>Ramp to 1121 °C at a ramp rate of 6 °C/min or slower<br>Ramp to 1218 °C in 2 hours<br>Hold at 1218 °C for 8 hours<br>Ramp to 1238 °C in 1 hour |
| Rejuvenation | Hold at 1238 °C for 2 to 4 hours |
| Cooling | Furnace cool to 1204 °C at rate of 17 °C/min or slower<br>Gas fan quench below 1204 °C at rate of 69 °C/min cool to 899 °C<br>A cooling rate of 83 °C/min should not be exceeded<br>Controlled gas cooling is not needed below 899 °C |
| First Aging | 1121 °C for 2 hours |
| Second Aging | 899 °C for 4 hours |

Example 2. Rejuvenation Heat Temperature for DS GTD444.

Rejuvenation at temperature > GP super-solvus is ideal for creep rejuvenation, but it poses a risk of RX and IM impacting transverse rupture ductility. It was determined herein that 1238 °C is an optimal temperature that is super-solvus for GP in DC but sub-solvus in ID. The prevalence of prior GP retains strain in the form of a dislocation network surrounding GP.

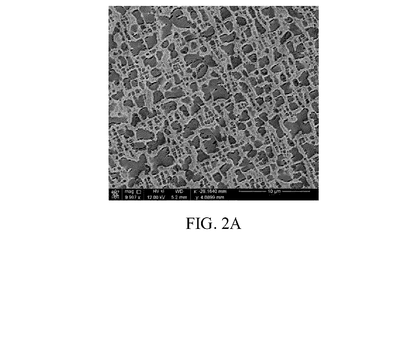

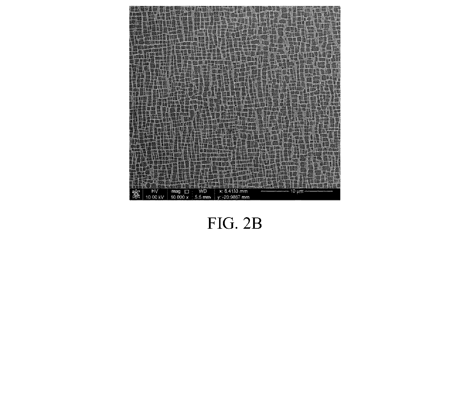

A scanning electron microscope (SEM) image of rejuvenation at 1218 °C is shown in Figure 2A, while an SEM image of a rejuvenation at 1238 °C is shown in Figure 2B. The scale bars are 10 $\mu$m for each figure. Figure 2A exhibits undissolved GP in DC, and therefore a significant fraction of prior GP is retained at 1218 °C. However, Figure 2B does not exhibit undissolved GP in DC, and therefore rejuvenation at 1238 °C dissolves all GP in DC.

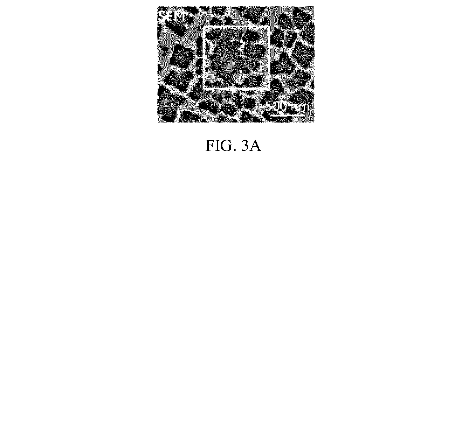

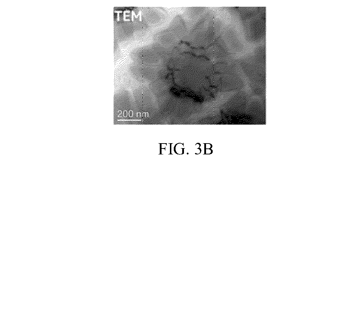

Dislocations due to creep is retained in DC after rejuvenation at 1232 °C are shown in Figures 3A-3B. Figure 3A is an SEM image and Figure 3B is a transmission electron microscope (TEM) image of the area within the square of Figure 3A. For a rejuvenation at 1232 °C, a fraction of prior GP (undissolved) were noticed in DC. Undissolved prior GP particles will continue to retain creep strain due to a dislocation network around particles. However, rejuvenation at 1238 °C ensures dissolution of all DC particles and thereby enables recovery of creep damage.

Example 3. Impact of Direct Gas Fan Quench on Transverse Ductility.

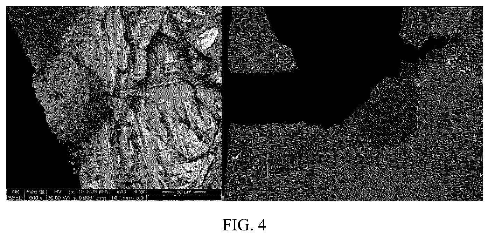

It was discovered herein that direct quench from the rejuvenation temperature (e.g., 1238 °C) negatively impacted transverse ductility. The decrease in ductility was sensitive to pre-strain > 0.5%, the presence of excessive script carbides, and direct quench from 1238 °C. As shown in Figure 4, fractography revealed trans-granular (TG) fracture mode initiated on the plane of script carbides. The abrupt low ductility fracture post rejuvenation was attributed to a combination of higher pre-strain and likely amplification of local damage at carbides due to direct gas quench cooling from the rejuvenation temperature (e.g., 1238 °C).

Overall, it was discovered herein that a method according to the present disclosure could mitigate the risk of poor damage tolerance and enable successful rejuvenation of DS superalloy compositions, such as those in gas turbine blades, particularly those in gas turbine blades that have accumulated $\leq 2\%$ strain in the longitudinal orientation and $\leq 0.75\%$ strain in the transverse orientation. The method was successfully validated through multiple repeat tests at 760 °C/85ksi on five different material pedigrees of DS GTD444 demonstrating at least 80% creep recovery with respect to baseline, at least 2% transverse ductility, and at least 10% longitudinal ductility.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

Although specific features of various embodiments of the invention may be shown in some drawings and not in others, this is for convenience only. Moreover, references to "some embodiments" in the above description are not intended to be interpreted as excluding the existence of additional embodiments that also incorporate the recited features. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of repair of a directionally solidified (DS) superalloy composition, the method comprising:

   optionally subjecting the DS superalloy composition to a hot isostatic pressing (HIP) cycle;
   heating the DS superalloy composition to a rejuvenation temperature ($T_R$) according to a multi-step heating profile;
   exposing the DS superalloy composition to the rejuvenation temperature ($T_R$) for a time sufficient to rejuvenate the DS superalloy composition;
   cooling the DS superalloy composition at a first cooling rate ($r_{C1}$) to a first cooling temperature ($T_{C1}$);
   cooling the DS superalloy composition at a second cooling rate ($r_{C2}$) to a second cooling temperature ($T_{C2}$);
   exposing the DS superalloy composition to a first aging temperature ($T_{A1}$) for a first time sufficient to age the DS superalloy composition; and
   exposing the DS superalloy composition to a second aging temperature ($T_{A2}$) for a second time sufficient to age the DS superalloy composition.

2. The method according to claim 1, wherein at least one of:

$$T_{A2} \leq T_{C2};$$

$$T_{C2} < T_{A1};$$

$$T_{A1} < T_{C1};$$

and

$$T_{C1} < T_R.$$

**3.** The method according to claim 1, wherein at least one of:

$$885\ °C \leq T_{A2} \leq 913\ °C;$$

$$885\ °C \leq T_{C2} \leq 913\ °C;$$

$$1107\ °C \leq T_{A1} \leq 1135\ °C;$$

$$1190\ °C \leq T_{C1} \leq 1219\ °C;$$

and

$$1224\ °C \leq T_R \leq 1252\ °C.$$

**4.** The method according to claim 1, wherein $r_{C1} < r_{C2}$.

**5.** The method according to claim 1, wherein at least one of:

$$r_{C1} \leq 17\ °C/min;$$

and

$$r_{C2} \leq 83\ °C/min.$$

**6.** The method according to claim 1, wherein the multi-step heating profile comprises:

heating the DS superalloy composition at a first heating rate ($r_{H1}$) to a first heating temperature ($T_{H1}$);
heating the DS superalloy composition at a second heating rate ($r_{H2}$) to a second heating temperature ($T_{H2}$);
heating the DS superalloy composition at a third heating rate ($r_{H3}$) to a third heating temperature ($T_{H3}$);
exposing the DS superalloy composition to the third heating temperature ($T_{H3}$) for a first heating time; and
heating the DS superalloy composition at a fourth heating rate ($r_{H4}$) to the rejuvenation temperature ($T_R$).

**7.** The method according to claim 1, wherein at least one of:

$$T_{H1} < T_{H2};$$

$$T_{H2} < T_{H3};$$

and

$$T_{H3} < T_R.$$

**8.** The method according to claim 1, wherein at least one of:

$$r_{H4} \leq r_{H3};$$

$$r_{H3} < r_{H2};$$

and

$$r_{H2} < r_{H1}.$$

9. The method according to claim 1, wherein at least one of:

$$r_{H1} \leq 17 \text{ °C/min};$$

$$r_{H2} \leq 5.5 \text{°C/min};$$

$$r_{H3} \leq 0.83 \text{ °C/min};$$

and

$$r_{H4} \leq 0.23 \text{ °C/min}.$$

10. The method according to claim 1, wherein the time sufficient to rejuvenate the DS superalloy composition is in a range of from about 0.5 hours to about 6 hours.

11. The method according to claim 1, wherein the first time sufficient to age the DS superalloy composition is in a range of from about 0.5 hours to about 4 hours.

12. The method according to claim 1, wherein the second time sufficient to age the DS superalloy composition is in a range of from about 0.5 hours to about 6 hours.

13. The method according to claim 1, wherein the DS superalloy composition is a nickel-based DS superalloy composition.

14. The method according to claim 1, wherein, prior to the method, the DS superalloy composition accumulated $\leq 2\%$ longitudinal strain and $\leq 0.75\%$ transverse strain.

15. The method according to claim 1, wherein the DS superalloy composition is a DS GTD444 composition or a DS R108 composition.

110

optionally subjecting the DS superalloy composition to a hot isostatic pressing (HIP) cycle; ⟋112

heating the DS superalloy composition to a rejuvenation temperature ($T_R$) according to a multi-step heating profile; ⟋114

exposing the DS superalloy composition to the rejuvenation temperature ($T_R$) for a time sufficient to rejuvenate the DS superalloy composition; ⟋116

cooling the DS superalloy composition at a first cooling rate ($r_{C1}$) to a first cooling temperature ($T_{C1}$); ⟋118

cooling the DS superalloy composition at a second cooling rate ($r_{C2}$) to a second cooling temperature ($T_{C2}$); ⟋120

exposing the DS superalloy composition to a first aging temperature ($T_{A1}$) for a first time sufficient to age the DS superalloy composition; and ⟋122

exposing the DS superalloy composition to a second aging temperature ($T_{A2}$) for a second time sufficient to age the DS superalloy composition ⟋124

FIG. 1

FIG. 2A

FIG. 2B

FIG. 3A

FIG. 3B

FIG. 4

**EUROPEAN SEARCH REPORT**

Application Number

EP 25 18 1436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/080183 A1 (ADHARAPURAPU RAGHAVENDRA RAO [IN] ET AL) 12 March 2020 (2020-03-12) * paragraphs [0001], [0005], [0029], [0036] - [0047], [0053]; claims 1-12; figures 3,5; example 1 * ----- | 1-15 | INV. C22C19/03 C22C19/05 F01D5/00 C22F1/10 |
| X | EP 1 398 393 A1 (ALSTOM SWITZERLAND LTD [CH]) 17 March 2004 (2004-03-17) * paragraphs [0001], [0016], [0018] - [0026]; claims 1-8; figure 2; tables 1,2 * ----- | 1-15 | |

| | |
|---|---|
| | **TECHNICAL FIELDS SEARCHED (IPC)** |
| | C22C F01D B23P C22F |

The present search report has been drawn up for all claims

| Place of search | Date of completion of the search | Examiner |
|---|---|---|
| The Hague | 24 October 2025 | Rausch, Elisabeth |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 1436

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | | Publication date |
|---|---|---|---|---|
| US 2020080183 A1 | 12-03-2020 | US | 2020080183 A1 | 12-03-2020 |
| | | WO | 2018111566 A1 | 21-06-2018 |
| EP 1398393 A1 | 17-03-2004 | AU | 2003297316 A1 | 30-04-2004 |
| | | CA | 2498663 A1 | 25-03-2004 |
| | | EP | 1398393 A1 | 17-03-2004 |
| | | EP | 1540026 A1 | 15-06-2005 |
| | | JP | 2005539139 A | 22-12-2005 |
| | | MX | PA05002833 A | 16-08-2005 |
| | | US | 2005205174 A1 | 22-09-2005 |
| | | WO | 2004024971 A1 | 25-03-2004 |

EPO FORM P0459

For more details about this annex : see Official Journal of the European Patent Office, No. 12/82

**EP 4 660 339 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63657177
- US 6908518 B
- US 5554837 A